# EUROPÄISCHE PATENTSCHRIFT

(11) **EP 0 879 264 B1**
(45) Veröffentlichungstag und Bekanntmachung des Hinweises auf die Patenterteilung: **25.04.2001**
(21) Anmeldenummer: 97917212.9
(22) Anmeldetag: 04.02.1997
(51) Int. Cl.: C08L 23/06, C08L 23/04

(54) **POLYETHYLEN MISCHUNG**
POLYETHYLENE BLEND
MELANGE POLYETHYLENE

(30) Priorität: 08.02.1996 DE 19604520
(43) Veröffentlichungstag der Anmeldung: 25.11.1998
(73) Patentinhaber: Buna Sow Leuna Olefinverbund GmbH, 06258 Schkopau (DE)
(72) Erfinder: SCHELLENBERG, Jürgen, D-06132 Halle (DE); KERRINNES, Heinz-Jürgen, D-06128 Halle (DE); FRITZSCHE, Gerd, 06268 Querfurt (DE); LOHSE, Gerd, D-06258 Schkopau (DE)
(86) Internationale Anmeldenummer: DE9700204
(87) Internationale Veröffentlichungsnummer: WO9729152

(56) Entgegenhaltungen:
- WO-A-94/17112
- WO-A-95/30713
- DE-A- 3 437 116

## Beschreibung

Die Erfindung betrifft ein Polyethylenblend auf der Grundlage von mit verschiedenen Katalysatorsystemen erhaltenen Polyethylenkomponenten zur Herstellung von Formkörpern wie beispielsweise Behältern, Folien, Rohren oder Platten.

Es ist bekannt, daß durch die Herstellung von Mischungen aus Ethylenpolymerisaten hoher Dichte Formmassen mit verbesserten anwendungstechnischen Eigenschaften bezüglich spezieller Kennwerte erzielt werden können (z. B. DE-PS 2727381). Diese Mischungen führen jedoch zwangsläufig durch die Verwendung der genannten Ethylenpolymerisate niederer Dichte auch zu Eigenschaften, die im Vergleich zu anderen Formmassen wie beispielsweise Mischungen aus Ethylenpolymerisaten hoher Dichte und linearenEthylenpolymerisaten niederer Dichte, die auf der Grundlage üblicher metallorganischer Katalysatoren hergestellt wurden, weniger erwünscht sind. Hierzu gehört beispielsweise eine vergleichsweise geringe Zähigkeit der Mischungen. Andererseits sind Formmassen auf der Grundlage von Mischungen aus Ethylenpolymerisaten hoher Dichte und linearen Ethylenpolymerisaten niederer Dichte, die mit üblichen metallorganischen Katalysatoren hergestellt wurden, bekannt (z. B. DE-OS 3437116). Diese Formmassen haben zwar eine verbesserte Zähigkeit, sowie einige vorteilhafte anwendungstechnische Eigenschaften, die jedoch für eine Vielzahl von Anwendungsfällen als noch nicht ausreichend angesehen werden müssen.
Bekannt ist bereits ein Verfahren zur Herstellung von zweikomponentigen mittelmoduligen Folien auf der Grundlage von substantiell linearem Polyethylen, wobei sich die Folie durch eine erhöhte Zähigkeit und gute Dimensionsstabilität auszeichnet und hergestellt wird durch Extrusion von Mischungen aus linearem hochmolekularem Ethylenpolymeren und mindestens einem substantiell linearem Ethylen/α-Olefin-Interpolymer (WO-A-9530713).
Des weiteren ist ein Verfahren zur Herstellung von Ethylen/α-Olefin-Interpolymeren durch Polymerisation zu Polymerzusammensetzungen mit kontrollierter Molmasseverteilung, die zur Fertigung von Folien, Formteilen und Fasern mit verbessertem Eigenschaftsniveau geeignet sind, bekannt (WO-A-9417112) und das unter Bedingungen einer Lösungspolymerisation arbeitet.

Der Erfindung liegt deshalb die Aufgabe zugrunde, ein Polyethylenblend auf der Grundlage von mit verschiedenen Katalysatorsystemen hergestellten Polyethylenkomponenten zu entwickeln, das sich durch ein gezielt eingestelltes und ausgewogenes Eigenschaftsbild und insbesondere durch eine hohe Zähigkeit und Reißfestigkeit auszeichnet.Erfindungsgemäß enthält dieses Polyethylen auf der Grundlage von mit verschiedenen Katalysatorkomponenten hergestellten Polyethylenkomponenten
A) 5 bis 97 Ma.-% eines mit üblichen metallorganischen Katalysatoren hergestellten Ethylenhomo- oder -copolymerisates hoher Dichte mit einem Verhältnis von massenmittlerer und zahlenmittlerer Molmasse M_{w}/Mₙ von > 3,5, einem Schmelzindex bei einer Temperatur von 190 °C und einer Belastung von 212 N von 0,1 bis 100 g/10 min sowie einer Dichte bei 23 °C von 0,949 bis 0,970 g/cm³,
B) 3 bis 95 Ma.-% eines mit Metallocen-Katalysatoren hergestellten linearen Ethylencopolymerisates niederer Dichte mit einer Zahl der Kohlenstoffatome im Comonomer von 4 bis 12, einem Verhältnis von massenmittlerer und zahlenmittlerer Molmasse M_{w}/Mₙ von 1,5 bis 3,5, einem Schmelzindex bei einer Temperatur von 190 °C und einer Belastung von 49 N von 0,1 bis 80 g/10 min, einer Dichte bei 23 °C von 0,900 bis 0,940 g/cm³ sowie einem mittleren Langkettenverzweigungsgrad von mindestens 0,01 Langkettenverzweigungen je 1000 C-Atome, sowie
C) 0,1 bis 10 Masseteile, bezogen auf 100 Masseteile der Komponenten A) und B), üblicher Kunststoffadditive einschließlich Stabilisatoren.

Der Erfindung gemäß kann das Polyethylenblend 10 bis 95 Ma.-% der Komponente A) und 5 bis 90 Ma.-% der Komponente B) enthalten.
Die Komponente A) kann erfindungsgemäß ein Ethylenhomo- oder -copolymerisat hoher Dichte mit einem Schmelzindex bei einer Temperatur von 190 °C und einer Belastung von 212 N von 1 bis 60 g/10 min sein. Als Komponente A) kann das Polyethylenblend der Erfindung gemäß eine Ethylenhomo- oder -copolymerisat hoher Dichte bei 23 °C von 0,941 bis 0,965 g/cm³ enthalten.

Entsprechend der Erfindung kann als Komponente B) ein lineares Ethylencopolymerisat niederer Dichte mit einem Schmelzindex bei einer Temperatur von 190 °C und einer Belastung von 49 N von 0,2 bis 50 g/10 min dienen.

Erfindungsgemäß kann als Komponente B) ein lineares Ethylencopolymerisat niederer Dichte mit einer Dichte bei 23 °C von 0,901 bis 0,939 g/cm³ verwendet werden. Die Komponente B) kann entsprechend der Erfindung ein lineares Ethylencopolymerisat niederer Dichte mit einem mittleren Langkettenverzweigungsgrad von mindestens 0,05 Langkettenverzweigungen je 1000 C-Atome sein. Der Erfindung gemäß kann das Polyethylenblend durch Mischen und Granulieren der genannten Ausgangskomponenten hergestellt werden.

Das entwickelte Polyethylenblend auf der Grundlage von mit verschiedenen Katalysatorsystemen hergestellten Polymerkomponenten zeichnet sich durch ein gezielt eingestelltes und ausgewogenes Eigenschaftsbild und insbesondere durch eine hohe Zähigkeit und Reißfestigkeit aus.

Die Erfindung soll nachstehend an einigen Ausführungsbeispielen näher erläutert werden.

### Beispiel 1 (Vergleichsbeispiel)

In diesem Beispiel wurde ein unter Verwendung üblicher metallorganischer Katalysatoren nach dem Gasphasenverfahren hergestelltes Ethylencopolymerisat hoher Dichte mit den in der Tabelle 1 angegebenen Eigenschaften als Komponente A) verwendet.
Als Komponente C) diente ein Stabilisatorgemisch aus 50 Masseprozent Pentaerythrityl tetrakis-[3-(3,5-di-tert.-butyl-4-hydroxyphenyl) propionat] und 50 Masseprozent Tris-(2,4-di-tert.-butylphenyl)phosphit.
Beide Komponenten wurden entsprechend den Angaben der Tabelle 2 auf einem Zweischneckenextruder mit einem Schneckendurchmesser von 40 mm bei einer Schmelztemperatur von 210 °C homogenisiert und granuliert.
An dem erhaltenen Granulat wurde der Schmelzindex MFI bei einer Temperatur von 190 °C und einer Belastung von 212 N gemäß DIN 53 735 ermittelt.
Weiterhin wurden in den aus dem Granulat hergestellten normgerechten Prüfkörpern der Biege-E-Modul nach DIN 53457, die Streckspannung nach DIN 53455, die Kerbschlagzähigkeit nach Izod bei Temperaturen von - 20°C und 23 °C nach ISO 180 sowie die Reißfestigkeit nach DIN 53455 bestimmt. Die Ergebnisse der Prüfungen sind in der Tabelle 3 zusammengestellt.

### Beispiel 2 (Vergleichsbeispiel)

Dieses Vergleichsbeispiel beinhaltet die Herstellung eines Polyethylenblends aus einem Ethylenhomo oder-copolymerisat hoher Dichte als Komponente A) und einem nicht erfindungsgemäßen auf der Basis üblicher metallorganischer Katalysatoren hergestellten linearen Ethylencopolymerisat niederer Dichte als Komponente B).
Als Komponenten A) und C) wurden hierbei die bereits im Beispiel 1 bzw. in Tabelle 1 genannten Komponenten verwendet. Als Komponente B) wurde ein auf der Basis üblicher metallorganischer Katalysatoren hergestelltes lineares Ethylencopolymerisat niederer Dichte ausgewählt, das mit dem in Beispiel 3 verwendeten erfindungsgemäß mit Metallocen-Katalysatoren hergestellten linearen Ethylencopolymerisat niederer Dichte als Komponente B) bezüglich der notwendigen molekularen Parameter, wie gleiches Comonomer, vergleichbarer Kurzkettenverzweigungsgrad und vergleichbare massenmittlere Molmasse (siehe Tabelle 1) weitgehend identisch ist.
Die Herstellung des Polymerblends erfolgte nach den Angaben des Beispiels 1 unter Zugrundelegung der in der Tabelle 2 aufgeführten Mengenverhältnisse, gleichfalls die Herstellung der Prüfkörper sowie die Bestimmung der Eigenschaften, die in der Tabelle 3 zusammengefaßt sind.

### Beispiel 3

Erfindungsgemäß wurde in diesem Beispiel ein Polymerblend aus einem mit üblichen metallorganischen Katalysatoren hergestellten Ethylenhomo-oder-copolymerisat hoher Dichte als Komponente A) und einem mit Metallocen-Katalysatoren hergestellten linearen Ethylencopolymerisat niederer Dichte als Komponente B) mit gegenüber dem Vergleichsbeispiel 2 gleicher mengenmäßiger Zusammensetzung der Komponenten gefertigt.
Die Komponenten A) und C) entsprechen den im Beispiel 1 verwendeten Komponenten. Die Kennwerte der Komponente B) sind in Tabelle 1 aufgeführt. Die Vorgehensweise der Herstellung und Prüfung ist aus den Angaben des Beispiels 1 ersichtlich, wobei jedoch die in der Tabelle 2 angegebene Zusammensetzung berücksichtigt wurde.
Die Eigenschaften des erfindungsgemäß hergestellten Polyethylenblends sind in der Tabelle 3 angegeben. Aus der Tabelle ist ersichtlich, daß sich dieses Polyethylenblend gegenüber dem Vergleichsbeispiel 1 und insbesondere gegenüber dem Polyethylenblend des Vergleichsbeispiels 2, das auf der Grundlage von einem mit üblichen metallorganischen Katalysatoren erhaltenen linearen Ethylencopolymerisat niederer Dichte bei gleicher Zusammensetzung hergestellt wurde, durch eine wesentlich höhere Zähigkeit über einen großen Temperaturbereich sowie eine wesentlich höhere Reißfestigkeit bei einem ausgewogenen Eigenschaftsbild beispielsweise hinsichtlich Streckspannung und Biege-E-Modul auszeichnet.

### Beispiel 4 (Vergleichsbeispiel)

Nach den Angaben des Beispiels 2 wurde abermals ein nicht erfindungsgemäßes Polyethylenblend aus den Komponenten A (Ethylenhomo-oder-copolymerisat hoher Dichte), B (lineares Ethylencopolymerisat niederer Dichte, nicht erfindungsgemäß hergestellt mittels üblicher metallorganischer Katalysatoren) sowie C (Kunststoffadditive) in der gemäß Tabelle 2 angeführten Zusammensetzung hergestellt und die Ergebnisse der Prüfung der Eigenschaften in der Tabelle 3 zusammengefaßt.

### Beispiel 5

In diesem Beispiel wurde gemäß der Erfindung ein Polymerblend aus einem mit üblichen metallorganischen Katalysatoren hergestellten Ethylenhomo- oder-copolymerisat hoher Dichte als Komponente A) und einem mit Metallocen-Katalysatoren erhaltenen linearen Ethylencopolymerisat niederer Dichte als Komponente B) mit gegenüber dem Vergleichsbeispiel 4 gleicher Komponenten-Zusammensetzung hergestellt.
Die Komponenten A), B) und C) entsprechen hierbei denen des Beispiels 3, gleichfalls die Herstellung des Blends nach den Angaben der Tabelle 2 sowie die Prüfung. Die erhaltenen Eigenschaften des erfindungsgemäß hergestellten Polyethylenblends in der Tabelle 3 belegen, daß sich gegenüber dem Vergleichsbeispiel 1 und besonders in Beziehung zum Vergleichsbeispiel 4, das auf der Basis von einem mit üblichen metallorganischen Katalysatoren gefertigten linearen Ethylenpolymerisat niederer Dichte bei gleicher Zusammensetzung hergestellt wurde, das Polyethylenblend dieses Beispiels durch bemerkenswert höhere Zähigkeiten schon bei tieferen Temperaturen sowie eine wesentlich höhere Reißfestigkeit bei einem ausgewogenen sonstigen Eigenschaftsbild auszeichnet.
Die Vergleichsbeispiele 2 und 4 zeigen weiterhin, daß bei nicht erfindungsgemäßer Vorgehensweise die bevorzugten Eigenschafiten nicht in gewünschter Weise erzielt weden können.

### Beispiele 6 und 7

Zur Herstellung erfindungsgemäßer Polyethylenblends wurde in diesen Beispielen nach den Vorgaben des Beispiels 3 verfahren und die Zusammensetzung der Blends nach den in der Tabelle 2 enthaltenen Werten eingestellt.

Die Eigenschaften der unter diesen Bedingungen erhaltenen Polyethylenblends sind gleichfalls in der Tabelle 3 zusammengestellt. Auch sie zeigen bereits bei geringen Anteilen der Komponente B) die hohe Zähigkeit und Reißfestigkeit der erfindungsgemäßen Blends bei einem ausgewogenen sonstigen Eigenschaftsbild.

**Tabelle 1**

| **Eigenschaften der verwendeten Komponenten A) und B)** | | | |
|---|---|---|---|
| Eigenschaft | Komponente A) | Komponente B) Bsp.2,4 | aus Bsp.3,5-7 |
| MFI (190°C, 212 N) [g/10 min] | 14,0 | | |
| MFI (190°C, 49 N) [g/10 min] | | 6,5 | 4,1 |
| Dichte bei 23 °C [g/cm₃] | 0,943 | 0,918 | 0,910 |
| M_{w}/Mₙ | 25 | 4,4 | 2,9 |
| Mw [g/mol] | | 108 000 | 97 000 |
| Kurzkettenverzweigungsgrad [CH₃/100 CH₂] | | 0,91 | 0,95 |
| Langkettenverzweigungsgrad [Verzweigungen je 1000 C-Atome] | | - | 0,2 |
| Comonomer | | Octen | Octen |

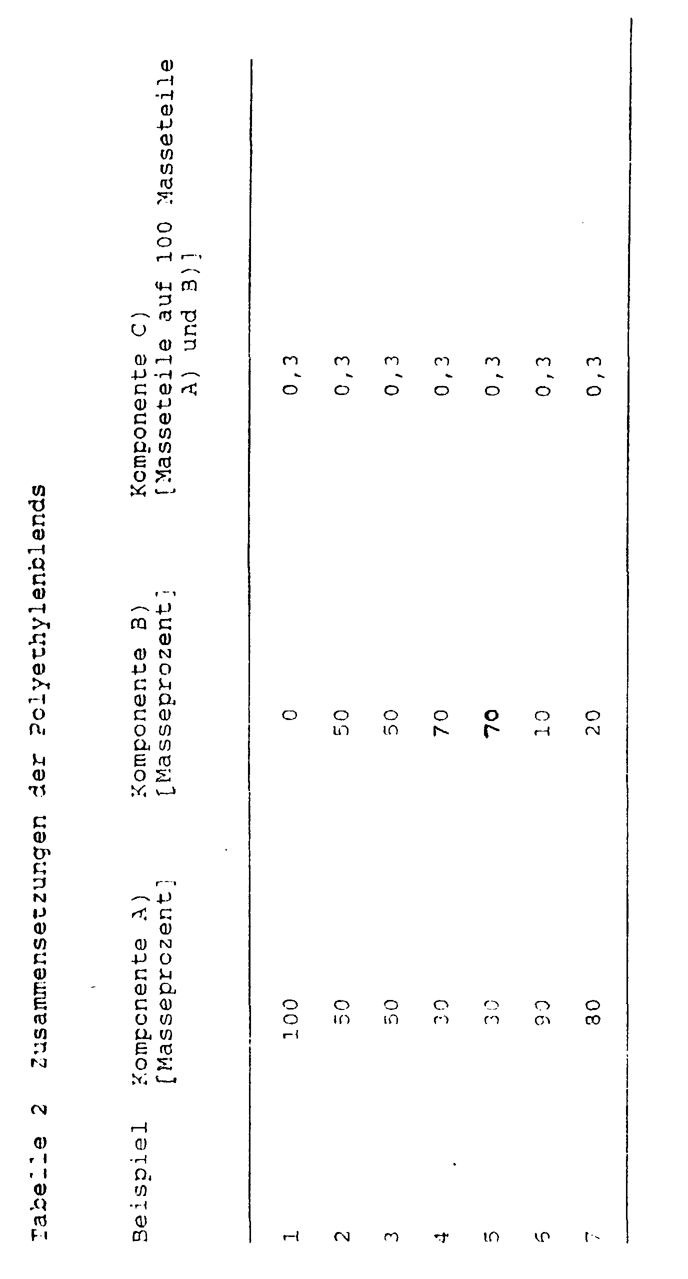

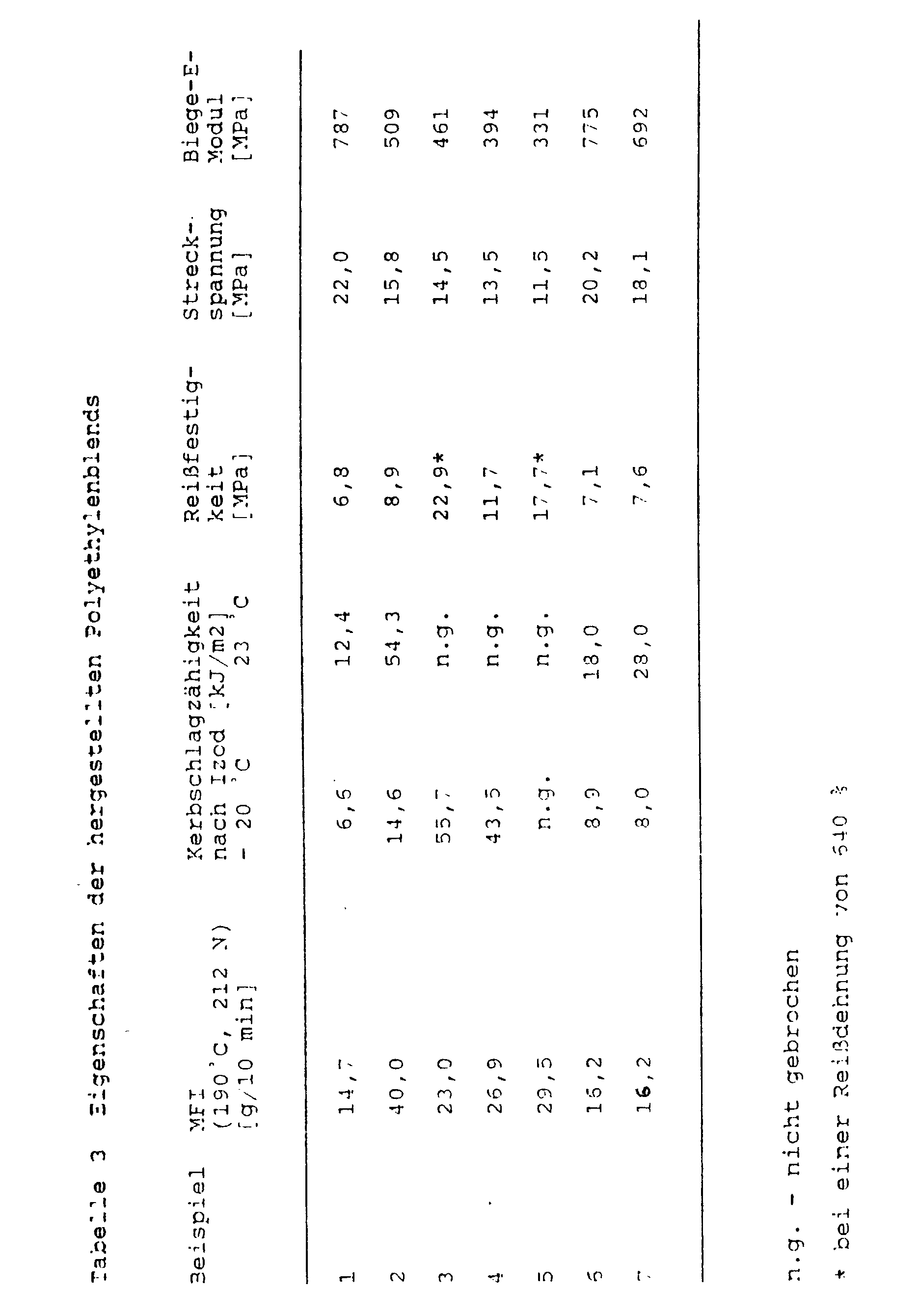

## Patentansprüche

1. Polyethylenblend auf der Grundlage von mit verschiedenen Katalysatorsystemen hergestellten Polyethylenkomponenten, enthaltend
A) 5 bis 97 Masseprozent eines mit üblichen metallorganischen Katalysatoren hergestellten Ethylenhomo- oder -copolymerisates hoher Dichte mit einem Verhältnis von massenmittlerer und zahlenmittlerer Molmasse M_{w}/Mₙ von > 3,5, einem Schmelzindex bei einer Temperatur von 190 °C und einer Belastung von 212 N von 0,1 bis 100 g /10 min sowie einer Dichte bei 23 °C von 0,940 bis 0,970 g/cm3,
B) 3 bis 95 Masseprozent eines mit Metallocen-Katalysatoren hergestellten linearen Ethylencopolymerisates niederer Dichte mit einer Zahl der Kohlenstoffatome im Comonomeren von 4 bis 12, einem Verhältnis von massenmittlerer und zahlenmittlerer Molmasse M_{w}/Mₙ von 1,5 bis 3,5, einem Schmelzindex bei einer Temperatur von 190 °C und einer Belastung von 49 N von 0,1 bis 80 g/10 min einer Dichte bei 23 °C von 0,900 bis 0,940 g/cm³ sowie einem mittleren Langkettenverzweigungsgrad von mindestens 0,01 Langkettenverzweigungen je 1000 C-Atome, sowie
C) 0,1 bis 10 Masseteile, bezogen auf 100 Masseteile der Komponenten A) und B), üblicher Kunststoffadditive einschließlich Stabilisatoren.

2. Polyethylenblend nach Anspruch 1, enthaltend 10 bis 95 Masseprozent der Komponente A) und 5 bis 90 Masseprozent der Komponente B).

3. Polyethylenblend nach Anspruch 1, enthaltend als Komponente A) ein Ethylenhomo- oder-copolymerisat hoher Dichte mit einem Schmelzindex bei einer Temperatur von 190 °C und einer Belastung von 212 N von 1 bis 60 g/10 min.

4. Polyethylenblend nach Anspruch 1, enthaltend als Komponente A) ein Ethylenhomo- oder copolymerisat hoher Dichte mit einer Dichte bei 23 °C von 0,941 bis 0,965 g/cm³.

5. Polyethylenblend nach Anspruch 1, enthaltend als Komponente B) ein lineares Ethylencopolymerisat niederer Dichte mit einem Schmelzindex bei einer Temperatur von 190 °C und einer Belastung von 49 N von 0,2 bis 50 g/10 min.

6. Polyethylenblend nach Anspruch 1, enthaltend als Komponente B) ein lineares Ethylencopolymerisat niederer Dichte mit einer Dichte bei 23 °C von 0,901 bis 0,939 g/cm³.

7. Polyethylenblend nach Anspruch 1, enthaltend als Komponente B) ein lineares Ethylencopolymerisat niederer Dichte mit einem mittleren Langkettenverzweigungsgrad von mindestens 0,05 Langkettenverzweigungen je 1000 C-Atome.

8. Polyethylenblend nach den Ansprüchen 1 bis 7, hergestellt durch Mischen und Granulieren der genannten Ausgangskomponenten.

## Claims

1. A polyethylene blend on the basis of polyethylene components produced with various catalyst systems containing
A) 5 to 97 percent by weight of an ethylene homo- or copolymer of high density produced with the usual organometallic catalysts with a ratio of weight-average and number-average molecular weight M_{w}/Mₙ of > 3.5, a melt flow index at a temperature of 190 °C and a load of 212 N of .1 to 100 g/10 min as well as a density of .940 to .970 g/cm³ at 23 °C.
B) 3 to 95 percent by weight of a linear ethylene copolymer of low density produced with metallocene catalysts with a number of carbon atoms of 4 to 12 in the comonomer, a ratio of weight-average and number-average molecular weight M_{w}/Mₙ of 1.5 to 3.5, a melt flow index at a temperature of 190 °C and a load of 49 N of .1 to 80 g/10 min, a density of .900 to .940 g/cm³ at 23 °C as well as a mean degree of long-chain branching of at least .01 long-chain branches per 1,000 C atoms as well as
C) .1 to 10 parts by weight, related to 100 parts by weight of components A) and B), of the usual plastic additives including stabilisers.

2. A polyethylene blend according to claim 1 containing 10 to 95 percent by weight of component A) and 5 to 90 percent by weight of component B).

3. A polyethylene blend according to claim 1 containing as component A) an ethylene homo- or copolymer of high density with a melt flow index at a temperature of 190 °C and a load of 212 N of 1 to 60 g/10 min.

4. A polyethylene blend according to claim 1 containing as component A) an ethylene homo- or copolymer of high density with a density of .941 to .965 g/cm³ at 23 °C.

5. A polyethylene blend according to claim 1 containing as component B) a linear ethylene copolymer of low density with a melt flow index at a temperature of 190 °C and a load of 49 N of .2 to 50 g/10 min.

6. A polyethylene blend according to claim 1 containing as component B) a linear ethylene copolymer of low density with a density of .901 to .939 g/cm³ at 23 °C.

7. A polyethylene blend according to claim 1 containing as component B) a linear ethylene copolymer of low density with a mean degree of long-chain branching of at least .05 long-chain branches per 1,000 C atoms.

8. A polyethylene blend according to claims 1 through 7 produced by mixing and pelletising the initial components specified.

## Revendications

1. Blend de polyéthylène à base de constituants de polyéthylène produits avec différents systèmes de catalyseurs, contenant
A) de 5 à 97 pour cent en poids d'un homopolymérisat ou copolymérisat d'éthylène de haute densité, produit avec des catalyseurs organico-minéraux usuels, avec un rapport de poids moléculaire moyen en poids et en nombre M_{w}/Mₙ de > 3,5, un indice de fusion de 0,1 à 100g /10 mn par une température de 190 °C et une charge de 212 N, ainsi qu'une densité à 23 °C de 0,940 à 0,970 g/cm³.
B) de 3 à 95 pour cent en poids d'un copolymérisat d'éthylène linéaire de haute densité, produit avec des catalyseurs Metallocen, avec un nombre d'atomes de carbone dans le comonomère de 4 à 12, un rapport de poids moléculaire moyen en poids et en nombre M_{w}/Mₙ de 1,5 à 3,5, un indice de fusion de 0,1 à 80g /10 mn par une température de 190 °C et une charge de 49 N, une densité à 23 °C de 0,900 à 0,940 g/cm³ ainsi qu'avec un degré moyen de ramification de longue chaîne de 0,01 ramification de chaîne longue pour chaque 1000 atomes de C, ainsi que
C) de 0,1 à 10 parts en poids d'adjuvants plastiques usuels, y compris stabilisants, par rapport à 100 parts en poids des constituants A) et B).

2. Blend de polyéthylène selon la revendication 1, contenant de 10 à 95 pour cent en poids du constituant A) et de 5 à 90 pour cent en poids du constituant B).

3. Blend de polyéthylène selon la revendication 1, contenant comme constituant A) un homopolymérisat ou copolymérisat d'éthylène de haute densité avec un indice de fusion de 1 à 60 g/10 mn par une température de 190 °C et une charge de 212 N.

4. Blend de polyéthylène selon la revendication 1, contenant comme constituant A) un homopolymérisat ou copolymérisat d'éthylène de haute densité avec une densité de 0,941 à 0,965 g/cm³ par 23 °C.

5. Blend de polyéthylène selon la revendication 1, contenant comme constituant B) un copolymérisat d'éthylène linéaire de base densité avec un indice de fusion de 0,2 à 50 g/ 10 mn par une température de 190 °C et une charge de 49 N.

6. Blend de polyéthylène selon la revendication 1, contenant comme constituant B) un copolymérisat d'éthylène linéaire de base densité avec une densité de 0,901 à 0,939 g/cm³ par 23 °C.

7. Blend de polyéthylène selon la revendication 1, contenant comme constituant B) un copolymérisat d'éthylène linéaire de base densité avec un degré moyen de ramification de longue chaîne de 0,05 ramification de chaîne longue pour chaque 1000 atomes de C.

8. Blend de polyéthylène selon les revendications de 1 à 7, produit par mélangeage et granulation des composants de départ cités.
